Europäisches Patentamt

(19) European Patent Office    (11) Publication number:    **0 140 936**

Office européen des brevets    **B1**

(12)    **EUROPEAN PATENT SPECIFICATION**

(45) Date of publication of patent specification: 08.06.88    (51) Int. Cl.⁴: **B 63 B 1/34,** B 64 C 21/10,
F 15 D 1/12

(21) Application number: 84901634.0

(22) Date of filing: 03.04.84

(86) International application number:
PCT/SE84/00118

(87) International publication number:
**WO 84/03867 11.10.84 Gazette 84/24**

(54) METHOD AND MEANS FOR PREVENTING WALL TURBULENCE.

(30) Priority: **05.04.83 SE 8301840**

(43) Date of publication of application:
**15.05.85 Bulletin 85/20**

(45) Publication of the grant of the patent:
**08.06.88 Bulletin 88/23**

(84) Designated Contracting States:
**AT BE CH DE FR GB LI NL SE**

(56) References cited:
**GB-A- 357 637
GB-A- 730 121
GB-A-1 034 370**

(73) Proprietor: **MALMSTRÖM, Anders Edvard Hugo
PL 404
S-380 31 Rockneby 2 (SE)**

(72) Inventor: **MALMSTRÖM, Anders Edvard Hugo
PL 404
S-380 31 Rockneby 2 (SE)**

(74) Representative: **Lenz, Franz et al
AWAPATENT AB Box 5117
S-200 71 Malmö (SE)**

The file contains technical information
submitted after the application was filed and
not included in this specification

Courier Press, Leamington Spa, England.

## Description

The present invention relates to a method and means for preventing wall turbulence.

Research is being conducted on the one hand to shed light on the mechanics of turbulence and, on the other hand, to prevent the formation of turbulence where it is detrimental. As one of many examples, it may be mentioned that the force braking the motion of a tanker consists to about 80% of the friction between the hull surface and the water. This friction is both laminar and turbulent, the turbulent friction being many times greater than the laminar friction. The potential gain that may be expected if one has succeeded in preventing the formation of turbulence thus is enormous, and this is, of course, one of the reasons for the intense search.

The present invention deals with that form of turbulence which occurs when a fluid, i.e. a liquid or a gas, is moving in relation to a wall (wall turbulence). The effect will be the same regardless of whether it is the fluid or the wall which is moving.

The research has revealed int. al. the following:

The innermost layer of the moving fluid, which has a thickness of but a few $\mu$, is characterised by an intense microscopic turbulence, and in that connection a division into streaks of different speeds occurs. The cohesion within some of these streaks, the so-called low-speed streaks, is disrupted after a certain rate of development according to special mechanics, and flow elements are pressed out transversely against the direction of flow. Since this takes place adjacent a wall, the main direction will be away from the wall. These eruptions, so-called "bursts", constitute the main part of the kinetic energy which is essential to the development of turbulence in the fluid outside the boundary layer.

The present invention aims at providing an optimum reduction of the friction between the wall and the fluid. To achieve this aim, the friction must be reduced to equal the unavoidable inner laminar friction of the respective fluid, and the boundary where motion takes place and where the friction thus sets in, is stable. In order to obtain maximum effect, the process should be disrupted in the streak formation phase of the schematically outlined start mechanics so that development into large scale turbulence outside the boundary layer is prevented. According to this deliberately restricted aim, all that occurs in a later phase of development will be a different matter. Thus, the present invention does not concern itself with or study the mechanics of turbulence or the relationship between turbulence outside the boundary layer and the mechanics in said boundary layer. Admittedly, this sharp isolation implies a simplification of the problem, but the intention is to provide a rationalisation.

Small longitudinal grooves or riblets in the wall surface could be used to prevent the transverse exchange of molecules within the boundary layer which is necessary for streak formation. (See the paper presented by Walsh and Weinstein at the AIAA 11th Fluid and Plasma Dynamics Conference, July 1978, which indicates the dimensions employed. The method is being adapted for use on aircraft fuselages.) Although it is possible in this manner to interfere with a division into streaks, such division cannot be stopped entirely because this exchange of molecules mainly is prevented in one plane, the surface plane. Since the exchange must be three-dimensional in its direction, and directions towards and away from the surface plane are open, only a limited effect can be obtained. If the grooves or riblets are given a triangular, conical shape in cross-section, the effect of transversely flung-out flow elements is dampened because these elements meet at an angle. This may somewhat increase the desired effect, but this is not the right way to reach the aim which is maximum effect.

It has previously been suggested for different purposes to design e.g. a ship's hull with projections or indentations of different types. Thus, GB—A—1,034,370 describes a structure having projections for providing vortices transverse to a flow and causing a mixing of said flow with that of the faster-moving water outside the boundary layer, thereby to prevent flow separation alongside the hull of a ship. By such a structure, it is not possible to prevent the appearance of wall turbulence. GB—A—730,121 discloses an arrangement having cup-shaped indentations. These serve to provide a smooth straight path for a craft travelling through any medium. Stabilization of the path is achieved in that fluid currents, because of the cup shape, are caused to move at an angle to the wall. In this manner, wall turbulence will not be avoided but rather increased on account of the direction of movement of the fluid currents. It is not known whether these indentations have ever been used on a ship's hull. However, a known use thereof is on golf balls provided precisely with such indentations to a path-stabilizing end.

It is the object of the present invention to provide a novel and practicable method of preventing the formation of wall turbulence by acting on the fluid adjacent the wall, not by acting on the above-mentioned boundary layer, but by producing a new boundary layer. To this end, the fluid boundary layer adjacent the walls is divided by means of a wall structure having a maximum height of about 0.1 mm, into flow elements which by repeated and enforced changes of direction are each caused to oscillate within the boundary layer, and are mixed continuously with one another. This is accomplished by using the means defined in any one of the appended claims 2—5.

The invention will be described in more detail below, reference being made to the accompanying drawing in which Fig. 1 is a highly schematic top plan view of an embodiment of the means according to the present invention, and Fig. 2 illustrates a lateral view of this embodiment. Fig. 3 is a top plan view of a modified embodiment of the invention.

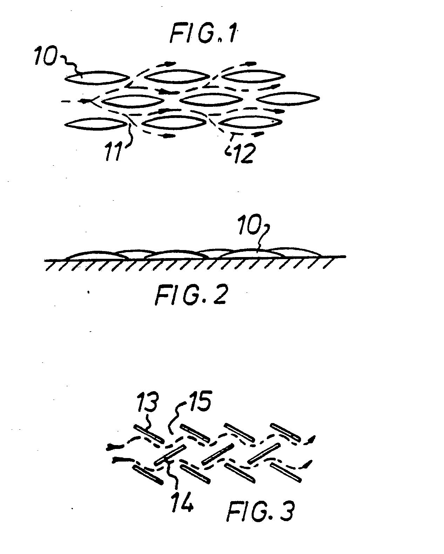

As has been mentioned above, wall turbulence can be prevented by enforced and repeated changes of direction, oscillation, of flow elements within the boundary layer. To achieve this change of direction, the surface concerned is provided with riblets 10 of the type shown in Figs. 1 and 2. The riblets 10 extend in the direction of the relative movement between the wall carrying the riblets and the fluid, such as water, and taper to a point towards their ends, as seen from above. Also in lateral view, the riblets taper towards their ends, as will appear from Fig. 2. In this manner, oblique planes are formed making an angle with one another and the direction of movement. The riblets 10 are arranged in rows lying close to one another, and between the riblets of each row spaces 11 are formed. Only three rows are shown, but it will be appreciated that the entire surface concerned is covered. Only the innermost fluid layer is to be effected, and for this reason the riblets have a very small height, preferably not more than 0.1 mm. When the wall with the riblets 10 and a fluid are moving relative to one another, the innermost fluid layer will be made to oscillate in that the riblets 10 force the flow elements to make repeated changes of direction, i.e. to oscillate, as is shown by the broken arrows 12, while maintaining their main direction. If no external interference occurs, the oscillation will keep within a restricted space, in this case within a restricted layer. Note that it must be an oscillation. A mere breakup will provide, in principle, the same effect as a coarse and rough surface. It is difficult, if not impossible, to obtain the requisite restriction to the space by means of a flow produced by breakup. Without such restriction, the situation is aggravated instead of being approved.

Fig. 3 illustrates another possibility of producing the above-mentioned effect. The riblets or oblique planes 13, 14 illustrated may have the same design as those shown in Fig. 1, but their shape may be varied as long as an oblique plane is formed which forms an angle with the relative direction of movement and the adjacent riblets. In this case, each riblet forms but one active oblique plane instead of the two active oblique planes of the riblets shown in Fig. 1.

Instead of the above-mentioned embodiments of the riblets, the riblets may also be in the form of elongate ridges which are sinusoidal as seen from above and which extend with their main direction parallel to one another and to the relative movement.

The above-mentioned riblets entail that, whenever a flow element reaches a surface, i.e. an oblique plane, the flow element is diverted in one direction and then, when it reaches the next surface, in another direction. This desired effect determines the location of the riblets relative to one another, as will appear from the drawing.

Thus, each riblet which provides a surface oblique to the direction of flow will turn a portion of the flow in the longitudinal direction of the said surface. It is, however, unavoidable that part of the flow is forced up over the riblet.

The cross-section of the riblet in the direction of flow must then have a smoothly rounded shape such that the flow elements will follow the surface of the riblet and thus will not be flung out to the fluid outside the boundary layer, thereby to supply kinetic energy which may produce turbulence.

As a result, there is obtained, simultaneously as the main direction is maintained, a three-dimensional oscillation with ensuing continuous mixing which reaches all the way down to the individual molecule, and any tendency to organisation in streaks of different speeds is prevented, and thus also the development of bursts penetrating the boundary region to the fluid above, which is the region that should be maintained stable.

The mechanics within the said boundary region will be a consequence of the oscillation in the boundary layer. Since the directional complex of the oscillation is three-dimensional, the friction against the fluid outside will be given a three-dimensional direction.

Also the nearest mass of the fluid is caused to oscillate, but with far less intensity and violence than the oscillation produced by the wall structure. This effect decreases rapidly and progressively in an outward direction.

The continuous mixing implies that the surface is immediately covered with a microscopically thin fluid layer which is maintained without organising itself in streaks.

If the boundary between the layer thus produced and the fluid outside is not penetrated by bursts or, for example, if no flow elements are directed outwardly by an incorrect structure, a stable boundary relation will be established, and within this boundary lies the predominant movement between the surface and the fluid. The friction will then equal the inner friction of the fluid and thus will be maximally reduced.

The surface of the small riblets must not, however, form such a large angle with the direction of flow that flow elements will be forced away from the surface. Furthermore, the mutual positions of said riblets must not be such that this effect is obtained. If this should happen, the effect will be, in principle, the same as with an industrial surface roughness of, for example, a hull surface, and this is percisely what one wishes to prevent.

The most efficient modelling of the structure varies with the mechanical characteristics (Re) of the fluid concerned, and with the speed. Establishing the correct dimension for each individual case is a later question which comes under the heading product development.

The gain of the present invention, in relation to the method referred to in the introduction, is that the dimensions of the structure can be much larger and still produce an effect. By dynamic means, an effect is obtained with the smallest units, and for producing and maintaining the structure this is an entirely decisive gain.

The drawing and the text may be interpreted such that the structure should be mathemetically exact and uniformly designed. This would have been the case, if one had to build up a mechanical structure. In the present case, however, it is intended to prevent a division into streaks within the fluid, i.e. to interfere with and prevent the development of mechanics, in which case considerable variations and irregularities in the pattern can be accepted without detracting from the effect.

**Claims**

1. A method for preventing wall turbulence upon relative motion between a wall and a fluid by acting on the fluid adjacent said wall, characterized in that the fluid boundary layer adjacent the wall is divided by means of a wall structure having a maximum height of about 0.1 mm, into flow elements which by repeated and enforced changes of direction are each caused to oscillate within the boundary layer, and are mixed continuously with one another.

2. Means for preventing wall turbulence upon relative motion between a wall and a fluid by acting on the fluid adjacent said wall, characterized in that it consists of elongate, narrow riblets (10, 13, 14) on said wall which have a maximum height of about 0.1 mm and are oriented with their main longitudinal dimension in a relative direction of motion, adjacent riblets (10, 13, 14) being mutually spaced apart (at 11) both longitudinally and transversely of the direction of flow so as to cause repeated, enforced changes of direction of the fluid within said boundary layer.

3. Means as claimed in claim 2, characterized in that said riblets (10) taper towards their ends.

4. Means as claimed in claim 2, characterized in that said riblets consist of approximately sinusoidal ridges.

5. Means for preventing wall turbulence upon relative motion between a wall and a fluid by acting on the fluid adjacent said wall, characterized in that it consists of elongate, narrow riblets (13, 14) on the wall which have a maximum height of about 0.1 mm and are spaced apart (at 15) both longitudinally and transversely of the direction of flow so as to cause repeated, enforced changes of direction of the fluid within said boundary layer, said riblets forming an angle with one another and with said relative direction of motion.

**Patentansprüche**

1. Verfahren zur Beseitigung von Wandturbulenz bei Relativbewegung zwischen einer Wand und einem Fluid durch Einwirkung auf das gegen die Wand anliegende Fluid, dadurch gekennzeichnet, dass die gegen die Wand anliegende Grenzschicht des Fluids mittels einer Wandstruktur mit einer maximalen Höhe von etwa 0,1 mm. in Strömungselemente unterteilt wird, die durch wiederholte und zwangsmässige Richtungsänderungen innerhalb der Grenzschicht in Schwingung versetzt und kontinuierlich miteinander vermischt werden.

2. Mittel zur Beseitigung von Wandturbulenz bei Relativbewegung zwischen einer Wand und einem Fluid durch Einwirkung auf das gegen die Wand anliegende Fluid, dadurch gekennzeichnet, dass es aus länglichen, schmalen Erhöhungen (10, 13, 14) an der genannten Wand besteht, die eine maximale Höhe von etwa 0,1 mm. haben und mit ihrer Hauptabmessung in Längsrichtung in einer relativen Bewegungsrichtung orientiert sind, wobei benachbarte Erhöhungen (10, 13, 14) sowohl in Längsrichtung der Strömungsrichtung wie auch quer zu dieser im Abstand voneinander angeordnet sind (bei 11), um wiederholte, zwangsmässige Richtungsänderungen des Fluids innerhalb der genannten Grenzschicht hervorzurufen.

3. Mittel nach Anspruch 1, dadurch gekennzeichnet, dass die genannten Erhöhungen (10) nach ihren Enden hin verjüngt sind.

4. Mittel nach Anspruch 2, dadurch gekennzeichnet, dass die genannten Erhöhungen aus annähernd sinusförmigen Rippen bestehen.

5. Mittel zur Beseitigung von Wandturbulenz bei Relativbewegung zwischen einer Wand und einem Fluid durch Einwirkung auf das gegen die Wand anliegende Fluid, dadurch gekennzeichnet, dass es aus länglichen, schmalen Erhöhungen (13, 14) an der Wand besteht, die eine maximale Höhe von etwa 0,1 mm. haben und sowohl in Längsrichtung der Strömungsrichtung als auch quer zu dieser im Abstand voneinander angeordnet sind (bei 15), um wiederholte, zwangsmässige Richtungsänderungen des Fluids innerhalb der genannten Grenzschicht hervorzurufen, wobei die genannten Erhöhungen einen Winkel miteinander und mit der genannten relativen Bewegungsrichtung einschliessen.

**Revendications**

1. Procédé destiné à empêcher la formation d'une turbulence de paroi lors d'un déplacement relatif entre une paroi et un fluide, par action sur le fluide adjacent à la paroi, caractérisé en ce que la couche limite de fluide adjacente à la paroi est divisée par une structure de paroi ayant une hauteur maximale d'environ 0,1 mm, en éléments de courant qui, par changements répétés et forcés de direction, sont mis chacun en oscillation dans la couche limite et se mélangent de façon continue les uns avec les autres.

2. Dispositif destiné à empêcher la turbulence de paroi lors d'un déplacement relatif entre une paroi et un fluide par action sur le fluide adjacent à la paroi, caractérisé en ce qu'il comporte des petites nervures étroites et allongées (10, 13, 14) formées sur la paroi et ayant une hauteur maximale d'environ 0,1 mm, ces petites nervures étant orientées de manière que leur direction longitudinale principale se trouve dans la direction relative de déplacement, des petites nervures adjacentes (10, 13, 14) étant séparées mutuellement (en 11) à la fois longitudinalement et transversalement par rapport à la direction du courant afin que le fluide subisse des changements répétés et forcés de direction dans la couche limite.

3. Dispositif selon la revendication 2, caractérisé en ce que les petites nervures (10) s'effilent vers leurs extrémités.

4. Procédé selon la revendication 2, caractérisé en ce que les petites nervures sont constituées de rebords approximativement sinusoïdaux.

5. Procédé destiné à empêcher la turbulence de paroi lors d'un déplacement relatif entre une paroi et un fluide, par action sur le fluide adjacent à la paroi, caractérisé en ce qu'il est formé de petites nervures étroites et allongées (13, 14) formées sur la paroi, et ayant une hauteur maximale d'environ 0,1 mm et séparées les unes des autres (en 15) à la fois longitudinalement et transversalement à la direction d'écoulement afin que le fluide subisse des changements répétés et forcés de direction dans la couche limite, les petites nervures faisant un angle les unes avec les autres et avec la direction relative de déplacement.

FIG.1

10

11   12

10

FIG.2

13  15

14   FIG.3